# EUROPEAN PATENT APPLICATION

(11) **EP 1 365 402 A2**
(43) Date of publication of application: **26.11.2003**
(21) Application number: 03252017.3
(22) Date of filing: 31.03.2003
(51) Int. Cl.: G11B 20/10

(54) **Apparatus and method of updating filter tap coefficients of equalizer**

(30) Priority: 21.05.2002 KR 2002028169
(71) Applicant: SAMSUNG ELECTRONICS CO., LTD., Suwon-City, Kyungki-do (KR)
(72) Inventor: Shim, Jae-seong, Seoul (KR); Park, Hyun-soo, Seodaemun-gu, Seoul (KR); Lee, Jae-wook, Gangnam-gu, Seoul (KR); Lee, Jung-hyun, Gyeonggi-do (KR)
(74) Representative: Robinson, Ian Michael

(57) **Abstract**

An apparatus and method of updating the filter tap coefficients of an equalizer used in an optical disc recording/reproducing apparatus, and a computer readable recording medium that stores a program for implementing the method. A filter unit (106) filters an error signal included in an input signal, which is a radio frequency (RF) signal reflected by an optical disc. A defect signal detection unit (107) detects whether the input signal is defective and outputs an update stop signal. A coefficient updating unit (111) stops updating a plurality of filter tap coefficients of the filter unit (106) in response to the update stop signal and outputs the current filter tap coefficients to the filter unit (106). By using the filter tap coefficient updating apparatus, the filter tap coefficient updating is normally performed without errors even if a defect exists on an optical disc or track jumping occurs, so that freezing or breaking of an image screen is prevented.

## Description

The present invention relates to updating of the filter tap coefficients of an equalizer, and more particularly, to an apparatus and method for updating the filter tap coefficients of an equalizer, by which the filter tap coefficients of the equalizer can be normally updated without errors even when a defect is generated on an optical disc or track jumping occurs in an optical disc recording/reproducing apparatus.

In order to increase the recording density of an optical disc, a partial response maximum likelihood (PRML) reading technique adopting a Viterbi decoding technique is used. An equalizer having a finite impulse response (FIR) filter unit composed of a plurality of digital filters is installed at the front portion of a Viterbi decoder, and equalizes the waveforms of a radio frequency (RF) signal reflected by an optical disc so that the RF signal has a level required by the Viterbi decoder.

However, if defects exist on an optical disc or track jumping occurs, the RF signal becomes unstable. Accordingly, an error is generated in updating the filter tap coefficients of an equalizer, so that the filter tap coefficients are diffused to unstable area values. Therefore, the equalizer becomes unstable, and thus freezing or breaking of image screens occurs.

The present invention provides an apparatus for updating the filter tap coefficients of an equalizer, by which the filter tap coefficients of the equalizer can be normally updated without errors even when a defect exists on an optical disc or track jumping occurs.

The present invention also provides a method of updating the filter tap coefficients of an equalizer, by which the filter tap coefficients of the equalizer can be normally updated without errors even when a defect exists on an optical disc or track jumping occurs.

According to an aspect of the present invention, there is provided an apparatus for updating filter tap coefficients of an equalizer, in which a filter unit filters an error signal included in an input signal, which is a radio frequency (RF) signal reflected by an optical disc. A defect signal detection unit detects whether the input signal is defective and outputting an update stop signal. A coefficient updating unit stops the updating of a plurality of filter tap coefficients of the filter unit in response to the update stop signal and outputs the current filter tap coefficients to the filter unit.

Preferably, the defect signal detection unit further receives a track jump signal, detects whether the track jump signal is defective, and outputs the update stop signal. Preferably, the filter tap coefficient apparatus further includes a control unit outputting a predetermined reference voltage, which determines whether the input signal is defective, to the defect signal detection unit.

According to an aspect of the present invention, there is also provided an apparatus for updating filter tap coefficients of an equalizer, in which a filter unit filters an error signal included in an input signal, which is an RF signal reflected by an optical disc. A coefficient updating unit updates a plurality of filter tap coefficients of the filter unit and outputs the updated filter tap coefficients to the filter unit. A control unit outputs predetermined initial filter tap coefficient values. An initial coefficient value storage unit receives the initial filter tap coefficient values from the control unit, stores the received initial values, and outputs the initial values to the coefficient updating unit. A re-initialization signal generation unit receives filter tap coefficients from the coefficient updating unit, detects whether the filter tap coefficients are diffused, generates a filter tap coefficient re-initialization signal if the filter tap coefficients are diffused, and outputs the filter tap coefficient re-initialization signal to the coefficient updating unit. The coefficient updating unit updates filter tap coefficients using the initial filter tap coefficient values received from the initial coefficient value storage unit, in response to the filter tap coefficient re-initialization signal.

Preferably, the re-initialization signal generation unit includes: an adder (121) receiving filter tap coefficients from the coefficient updating unit and adding the received filter tap coefficients; and a comparator comparing the output value of the adder with a predetermined reference value.

Preferably, the adder obtains a sum T1 of all of the filter tap coefficients received from the coefficient updating unit, and the comparator receives a bottom threshold TH1 and a top threshold TH2 from the control unit and outputs the re-initialization signal if the sum T1 is smaller than the bottom threshold TH1 or greater than the top threshold TH2.

Preferably, the initial coefficient value storage unit receives from the control unit the filter tap coefficients of an equalizer that are in a stable state a predetermined period of time after the initial operation of the equalizer and stores the received filter tap coefficients.

According to an aspect of the present invention, there is also provided an apparatus for updating the filter tap coefficients of an equalizer, in which a filter unit filters an error signal included in an input signal, which is an RF signal reflected by an optical disc. A defect signal detection unit detects whether the input signal is defective and outputs an update stop signal. If the update stop signal represents that updating is to be stopped, a coefficient updating unit stops the updating of a plurality of filter tap coefficients of the filter unit and outputs the current filter tap coefficients to the filter unit. On the other hand, if the update stop signal does not represent that updating is to be stopped, the coefficient updating unit updates the filter tap coefficients and outputs the updated filter tap coefficients to the filter unit. A control unit outputs a predetermined reference voltage, which determines whether the input signal is defective, to the defect signal detection unit and outputs predetermined initial filter tap coefficient values. An initial coefficient value storage unit receives the initial filter tap coefficient values from the control unit, stores the received initial values, and outputs the initial values to the coefficient updating unit. A re-initialization signal generation unit receives filter tap coefficients from the coefficient updating unit, detects whether the filter tap coefficients are diffused, generates a tap coefficient re-initialization signal if the filter tap coefficients are diffused, and outputs the tap coefficient re-initialization signal to the coefficient updating unit. The coefficient updating unit updates filter tap coefficients using the initial filter tap coefficient values received from the initial coefficient value storage unit, in response to the tap coefficient re-initialization signal.

Preferably, the defect signal detection unit further receives a track jump signal, detects whether the track jump signal is defective, and outputs the update stop signal. Preferably, the re-initialization signal generation unit includes: an adder receiving filter tap coefficients from the coefficient updating unit and adding the received filter tap coefficients; and a comparator comparing the output value of the adder with the predetermined reference value received from the control unit. The adder obtains a sum T1 of all of the filter tap coefficients received from the coefficient updating unit, and the comparator receives a bottom threshold TH1 and a top threshold TH2 from the control unit and outputs the re-initialization signal if the sum T1 is smaller than the bottom threshold TH1 or greater than the top threshold TH2.

Preferably, the initial coefficient value storage unit receives from the control unit the filter tap coefficients of an equalizer that are stabilized a predetermined period of time after the initial operation of the equalizer and stores the received filter tap coefficients.

According to another aspect of the present invention, there is provided a method of updating the filter tap coefficients of an equalizer, in which an input signal, which is an RF signal reflected by an optical disc is first received. Then, whether the input signal is defective is detected. If a defect is detected from the input signal, the updating of a plurality of filter tap coefficients of an equalizer filter unit is stopped, and the current filter tap coefficients are output to the equalizer filter unit.

Preferably, when the RF signal reflected by an optical disc is received, a track jump signal is further received and undergoes the defect detection step and the filter tap coefficient updating step.

More preferably, in the defect detection step, a predetermined reference value is compared with the input signal.

According to another aspect of the present invention, there is also provided a method of updating the filter tap coefficients of an equalizer, in which a plurality of filter tap coefficients are received from an equalizer filter unit. Next, a reference value for determining whether filter tap coefficient re-initialization is to be performed is obtained from the filter tap coefficients. Then, the reference value is compared with a predetermined standard value, and the filter tap coefficients are re-initialized.

Preferably, in the reference value obtaining step, a sum T1 of all of the filter tap coefficients is determined as the reference value. The filter tap coefficients are re-initialized if the sum T1 is smaller than a bottom threshold TH1 or greater than a top threshold TH2.

Preferably, in the filter tap coefficient re-initialization step, the filter tap coefficients of the equalizer filter unit are re-initialized using filter tap coefficients pre-stored in an equalizer stabilized a predetermined period of time after the initial operation of the equalizer.

According to another aspect of the present invention, there is also provided a method of updating the filter tap coefficients of an equalizer, in which an input signal, which is an RF signal reflected by an optical disc, is first received. Next, whether the input signal is defective is detected. If a defect is detected from the input signal, the updating of a plurality of filter tap coefficients of an equalizer filter unit is stopped, and the current filter tap coefficients are output to the equalizer filter unit. On the other hand, if no defects are detected from the input signal, a reference value for determining whether filter tap coefficient re-initialization is to be performed is obtained from the filter tap coefficients. Then, the reference value is compared with a predetermined standard value, and the filter tap coefficients are re-initialized.

Preferably, when the RF signal reflected by the optical disc is received, a track jump signal is further received and undergoes the defect detection step and the filter tap coefficient updating step.

Preferably, in the defect detection step, a predetermined reference value is compared with the input signal.

Preferably, in the reference value obtaining step, a sum T1 of all of the filter tap coefficients is determined as the reference value. If the sum T1 is smaller than a bottom threshold TH1 or greater than a top threshold TH2, the filter tap coefficients are re-initialized.

Preferably, in the filter tap coefficient re-initialization step, the filter tap coefficients of the equalizer filter unit are re-initialized using filter tap coefficients pre-stored in an equalizer stabilized a predetermined period of time after the initial operation of the equalizer.

The present invention will be described more fully hereinafter with reference to the accompanying drawings, in which preferred embodiments of the invention are shown. Terms or words used in the specification and the claims should be interpreted as meanings and concepts that confirm to the technical spirit of the present invention, based on the principle that an inventor(s) can adequately define the concepts of words in order to explain the invention in the best way.

For a better understanding of the invention, and to show how embodiments of the same may be carried into effect, reference will now be made, by way of example, to the accompanying diagrammatic drawings in which:
Figure 1 is a block diagram of an apparatus for updating the filter tap coefficients of an equalizer, according to a first embodiment of the present invention;
Figure 2 is a flowchart illustrating a tap coefficient updating method performed in the tap coefficient updating apparatus according to the first embodiment of the present invention;
Figures 3 and 4 illustrate a problem generated when tap coefficient updating is stopped according to the first embodiment of the present invention;
Figure 5 is a conceptual view for explaining tap coefficient re-initialization;
Figure 6 is a block diagram of an apparatus for updating the filter tap coefficients of an equalizer, according to a second embodiment of the present invention;
Figure 7 is a block diagram of the re-initialization signal generation unit of Figure 6;
Figure 8 is a flowchart illustrating a tap coefficient updating method performed in the tap coefficient updating apparatus according to the second embodiment of the present invention;
Figures 9 and 10 are flowcharts illustrating steps 220 and 230 of Figure 8 in greater detail;
Figure 11 is a block diagram of an apparatus for updating the filter tap coefficients of an equalizer, according to a third embodiment of the present invention;
Figure 12 is a flowchart illustrating a tap coefficient updating method performed in the tap coefficient updating apparatus according to the third embodiment of the present invention;
Figure 13 illustrates waveforms representing the operation of the tap coefficient updating apparatus according to the first embodiment of the present invention shown in Figure 1; and
Figures 14A and 14B illustrate waveforms representing the operation of the tap coefficient updating apparatus according to the third embodiment of the present invention shown in Figure 11.

In case that defects exist on an optical disc or track jumping occurs, a radio frequency (RF) signal is unstablized, such that an error is generated in updating the filter tap coefficients of an equalizer. This problem can be solved by detecting an abnormal state such as defects or track jumping and pausing tap coefficient updating during the period of the abnormal state.

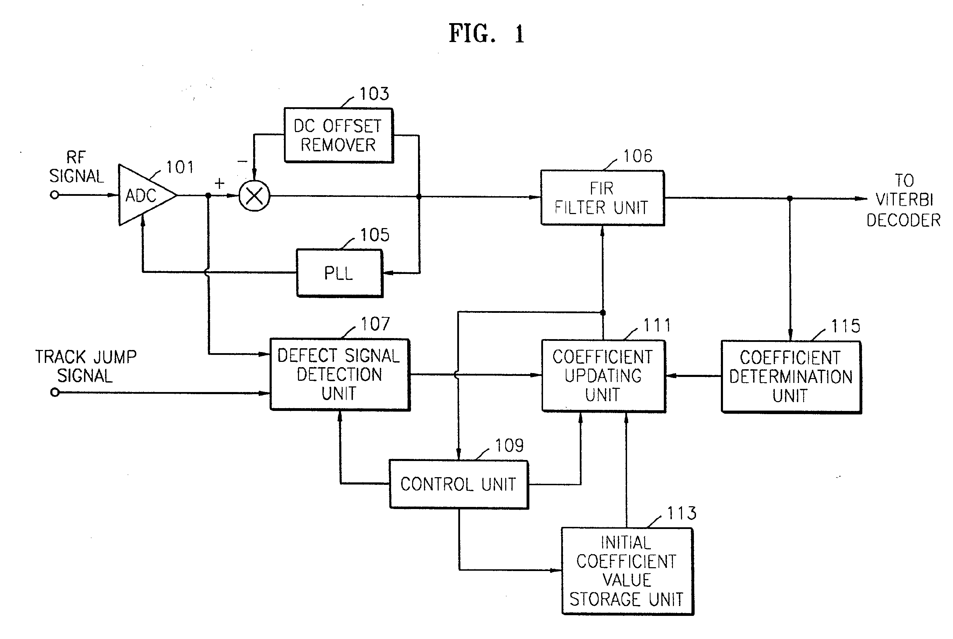

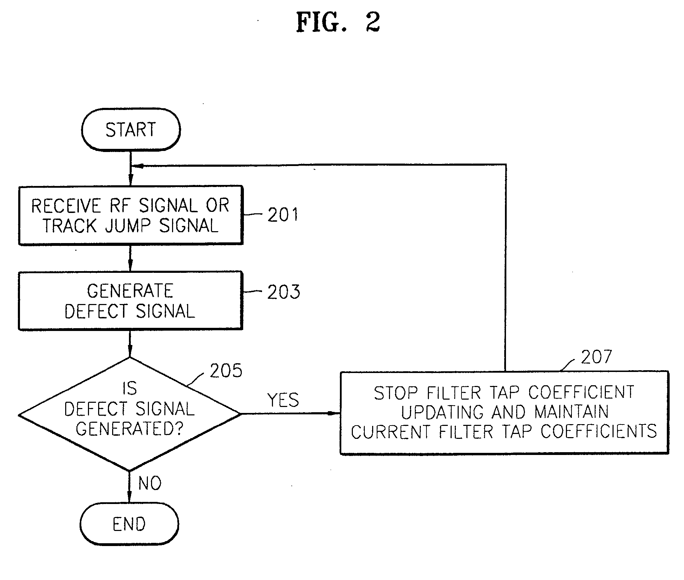

An apparatus and method of detecting an abnormal state and pausing tap coefficient updating during the period of the abnormal state will now be described with reference to Figures 1 and 2.

Figure 1 is a block diagram of an apparatus for updating the filter tap coefficients of an equalizer, according to a first embodiment of the present invention. An analog-to-digital converter (ADC) 101 receives an electrical RF signal corresponding to the amount of laser light reflected by an optical disc, samples the RF signal, and converts the resultant RF signal into a digital signal.

A direct current (DC) offset remover 103 removes a DC offset from the sampled RF signal.

A phase locked loop (PLL) 105 produces a system clock signal.

A finite impulse response (FIR) filter unit 106 composed of a plurality of digital filters receives the output signal of the ADC 101 and sets the waveform of an RF signal so that the RF signal has a level required by a Viterbi decoder.

A defect signal detection unit 107 receives the sampled RF signal from the ADC 101 and/or a track jump signal, representing that a pick-up unit (not shown) jumped a track, from a servo unit (not shown), checks if the RF signal has a defect, and outputs an update stop signal determining whether tap coefficient updating is to be stopped.

To be more specific, if a defect exists on an optical disc or a laser jumps a track, the RF signal becomes larger or smaller compared to a normal case. When such an abnormal RF signal is received, a defect signal indicating that the received RF signal is abnormal is generated.

In order to detect a defect, the defect signal detection unit 107 receives a sampled RF signal from the ADC 101, detects the upper and lower thresholds of the received sampled RF signal using a filter (not shown), and applies the detected upper and lower thresholds to a comparator (not shown). If the upper and lower thresholds of the received sampled RF signal are greater or smaller than their respective reference values, a defect signal is generated.

In the meantime, in order to detect track jumping, the defect signal detection unit 107 receives the track jump signal from the servo unit (not shown) and generates a defect signal using the track jump signal.

As described above, the defect signal detection unit 107 outputs an update stop signal for stopping tap coefficient updating, when it detects a defective RF signal corresponding to a defect or track jump section.

When a system resumes, a coefficient updating unit 111 receives an initialization signal from a control unit 109, reads initial values from a coefficient initial value storage unit 113, and supplies a tap coefficient to the FIR filter unit 106. Thereafter, the coefficient updating unit 111 receives data regarding tap coefficient updating from a coefficient determination unit 115 and updates filter tap coefficients. During coefficient updating, when the coefficient updating unit 111 receives from the defect signal detection unit 107 an update stop signal that commands the coefficient updating to be stopped, it stops the coefficient updating and outputs current filter tap coefficients to the FIR filter unit 106 in order to prevent the filter tap coefficients from being diffused into unstable region values.

The coefficient initial value storage unit 113 receives initial filter tap coefficient values from the control unit 109, stores the same, and outputs the same to the coefficient updating unit 111. As to the initial filter tap coefficient values, the control unit 109 receives the filter tap coefficients of an equalizer being in a stable state a certain period of time after the initial operation from the coefficient updating unit 111 and then outputs the received filter tap coefficients to the initial coefficient value storage unit 113. The initial coefficient value stage unit 113 may store the filter tap coefficients received from the control unit 109 as initial values. For example, coefficient values 300ms after disc rotation are set to be initial values.

Alternatively, the initial coefficient value storage unit 113 may receive initial filter tap coefficient values pre-set as default values from the control unit 109 and store them as initial values. In the case of an 11-tap filter, if a tap coefficient is Cᵢ (where i is an integer in the range of 0 to 10), C₄, C₅, and C₆ are 1 and the other filter tap coefficients are 0.

The coefficient determination unit 115 calculates data for a tap coefficient update and provides the calculated data to the coefficient updating unit 111. There are various different conventional algorithms for determining a new coefficient. An example of a conventional algorithm is a least mean square (LMS) algorithm, which is disclosed in detail in Korean Publication Patent No. 2001-45325.

Figure 2 is a flowchart illustrating a tap coefficient updating method performed in the tap coefficient updating apparatus according to the first embodiment of the present invention. First of all, an RF signal, which is an electrical signal into which laser reflected by an optical disk is converted, is applied to the ADC 101, and the defect signal detection unit 107 receives a sampled RF signal from the ADC 101 and/or a track jump signal from a servo unit (not shown), in step 201.

Next, the defect signal detection unit 107 checks if the RF signal has a defect, in response to the RF signal and/or the track jump signal, in step 203.

If a defect is detected from the RF signal, the defect signal detection unit 107 outputs an update stop signal to the coefficient updating unit 111, and accordingly the coefficient updating unit 111 stops updating a plurality of filter tap coefficients and outputs the current filter tap coefficients to the FIR filter unit 106, in steps 205 and 207. Accordingly, coefficient updating is stopped when a defect is detected from the RF signal, thereby preventing filter tap coefficients from being diffused into unstable regions.

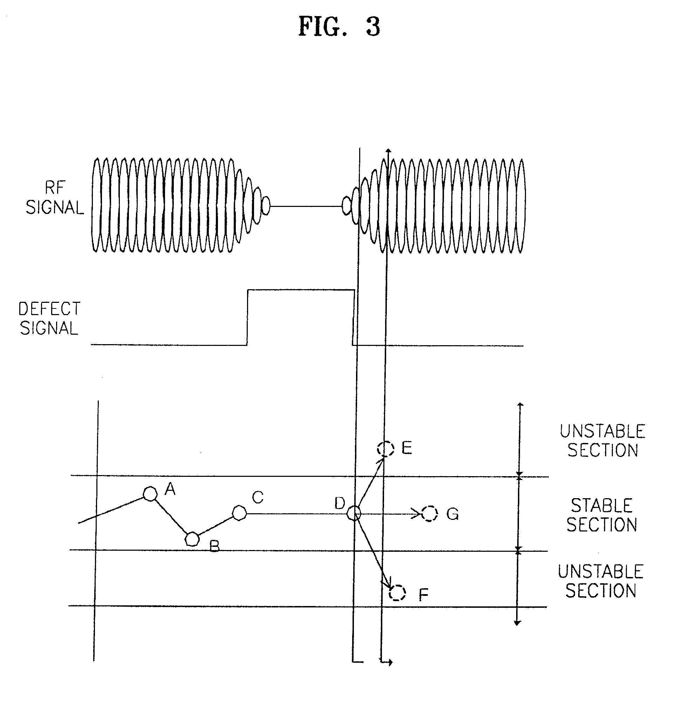

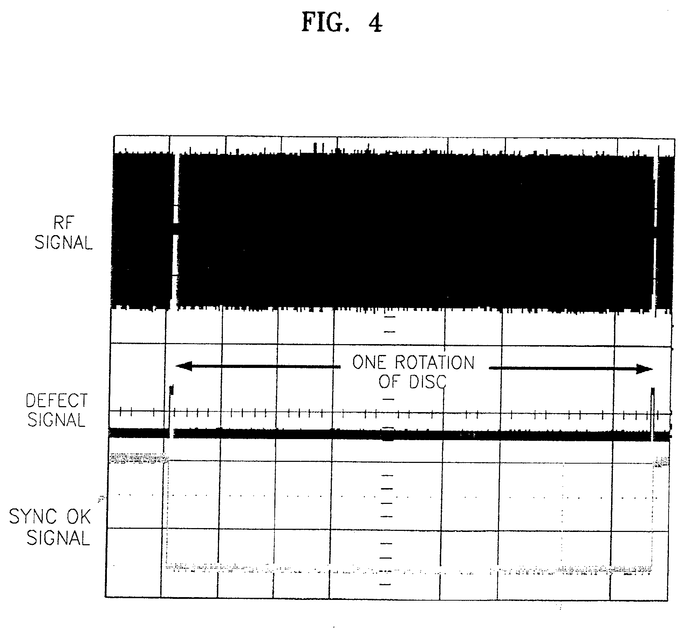

However, in spite of the above-described method, filter tap coefficients may be diffused. This problem is shown in Figures 3 and 4.

Figure 3 is a conceptual view illustrating a defective RF signal, a detected defect signal, and a process for updating filter tap coefficients. Referring to Figure 3, the defective RF signal has a weak level during a defect period, and the defect signal detection unit 107 detects a defect signal. That is, the defect signal turns into an update stop signal and the update stop signal is applied to the coefficient updating unit 111 in order to stop updating over the defect period. Hence, the sum of the filter tap coefficients, ΣCᵢ, remains constant during the defect period from point C to point D when coefficient updating stops. The sum of the filter tap coefficients, ΣCᵢ, serves as a reference value representing whether the filter tap coefficients of an equalizer are normally updated.

Immediately after the point D, the defect period is terminated, and coefficient updating resumes. For a short period immediately after updating resumes, the RF signal is unstable and the reference value ΣCᵢ may turn into a value E or F. Thus, the RF signal reference value ΣCᵢ belongs to an unstable section.

Figure 4 shows a malfunction of a system due to diffusion of filter tap coefficients into an unstable section during the above-described transition period between points D and E or points D and F. Coefficient updating is paused during the defect period, but filter tap coefficients are diffused during the transition period, such that a sync detector outputs a low sync ok signal that indicates a malfunction of the system. A high sync ok signal represents the normal operation of a system.

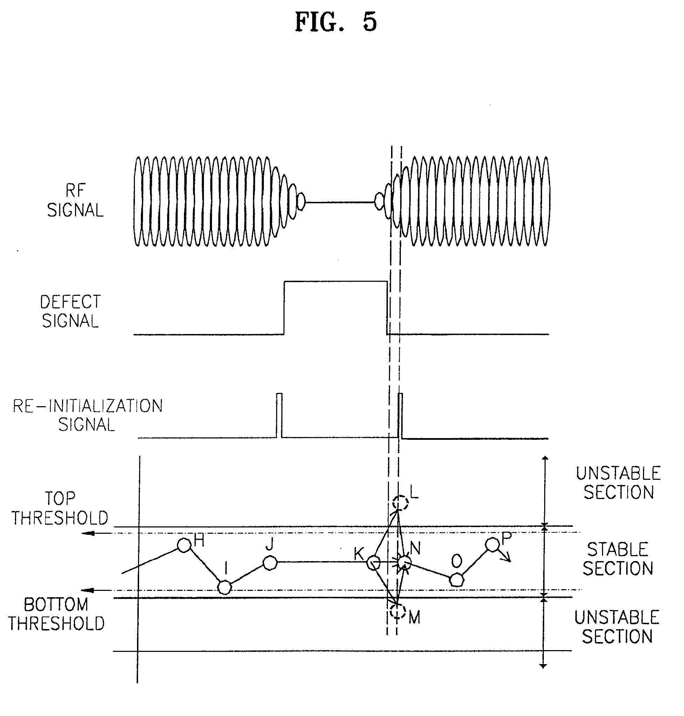

Figure 5 is a conceptual view explaining tap coefficient re-initialization in order to solve the system malfunction problem. Referring to Figure 5, when the reference value ΣCᵢ is not updated to a stable section between a top threshold and a bottom threshold but to an unstable section during the transition period, tap coefficient updating stops and initialization resumes, so that the reference value ΣCᵢ is located in the stable section.

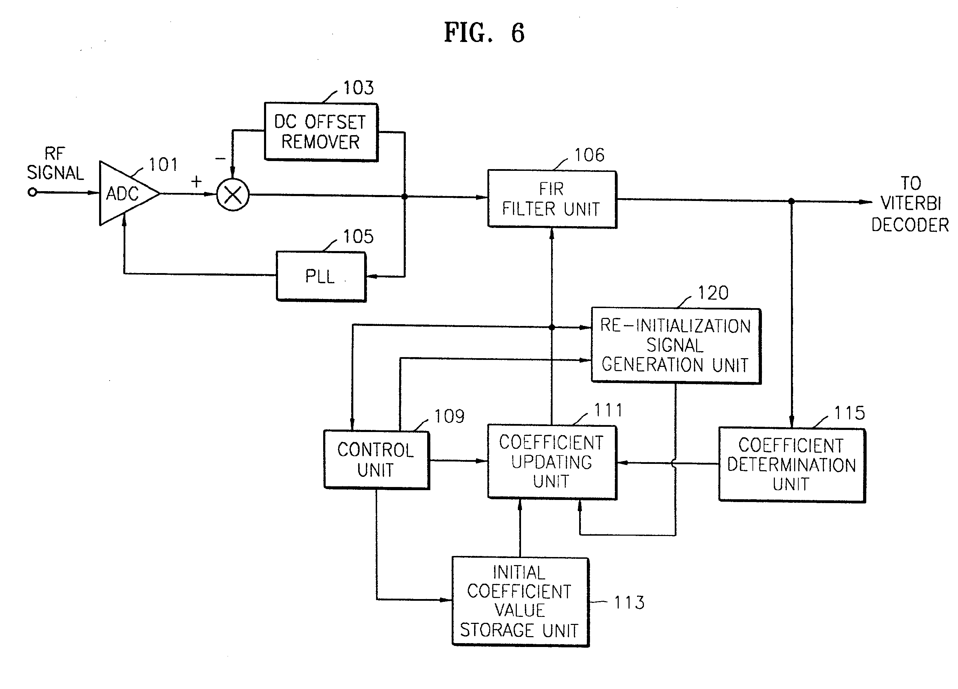

Hereinafter, a tap coefficient updating apparatus and method which solve the system malfunction problem will be described with reference to Figures 6 through 10.

Figure 6 is a block diagram of an apparatus for updating the filter tap coefficients of an equalizer, according to a second embodiment of the present invention. Since the tap coefficient updating apparatus according to the second embodiment is similar to the tap coefficient updating apparatus of Figure 1, only the different elements will be described without description of like elements.

A re-initialization signal generation unit 120 receives filter tap coefficients from the control unit 109, detects whether the filter tap coefficients are diffused, generates a tap coefficient re-initialization signal if the filter tap coefficients are diffused, and outputs the tap coefficient re-initialization signal to the coefficient updating unit 111.

In response to the tap-coefficient re-initialization signal, the coefficient updating unit 111 updates filter tap coefficients using the initial coefficient values received from the initial coefficient value storage unit 113.

The initial coefficient value storage unit 113 outputs the pre-stored initial coefficient values to the coefficient updating unit 111. When the coefficient updating unit 111 receives the tap coefficient re-initialization signal, it reads an initial filter tap coefficient value from the initial coefficient value storage unit 113 and initializes the filter tap coefficients. As to the initial filter tap coefficient values, the control unit 109 receives the filter tap coefficients of an equalizer that are in a stable state a certain period of time after the initial operation of the equalizer from the coefficient updating unit 111 and then outputs the received filter tap coefficients to the initial coefficient value storage unit 113. The initial coefficient value stage unit 113 may store the filter tap coefficients received from the control unit 109 as initial values. For example, coefficient values 300ms after rotation of a disc when a re-initialization signal is 0, that is, in a normal system when re-initialization is not performed, are set as initial values.

Alternatively, the initial coefficient value storage unit 113 may receive initial filter tap coefficient values pre-set as default values from the control unit 109 and store them as initial values. In the case of an 11-tap filter, if a filter tap coefficient is Cᵢ (where i is an integer in the range of 0 to 10), C₄, C₅, and C₆ are 1 and the other filter tap coefficients are 0.

The control unit 109 provides predetermined reference values to the re-initialization signal generation unit 120 and outputs a control signal so that the re-initialization signal generation unit 120 performs a predetermined operation.

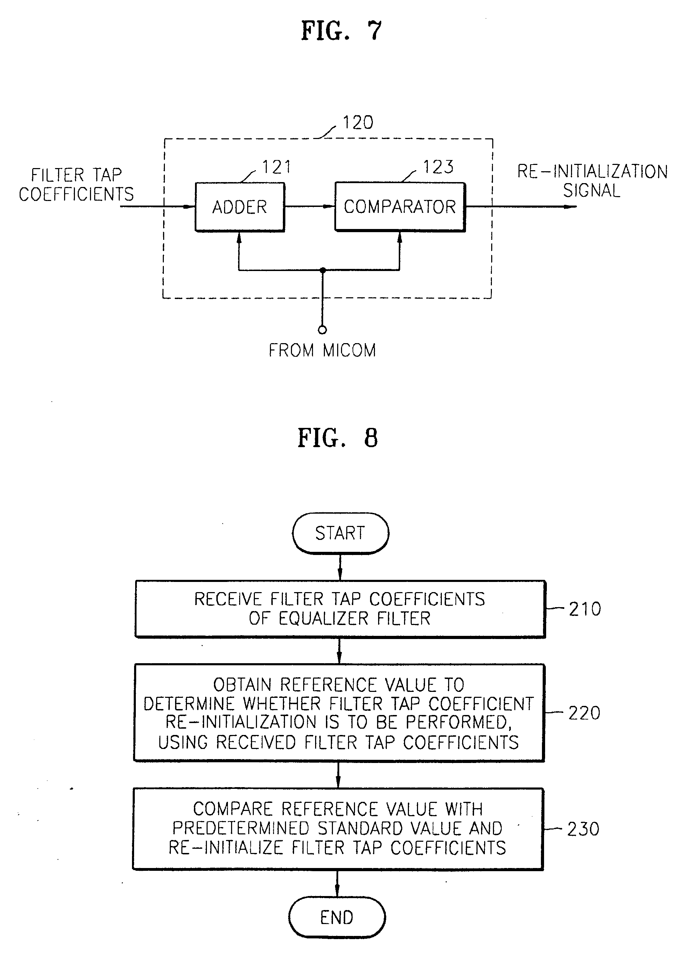

Figure 7 shows the re-initialization signal generation unit 120 including an adder 121 and a comparator 123. When the control signal of the control unit 109 is input to the adder 121, the adder 121 sums the filter tap coefficients received from the coefficient updating unit 111 to obtain and output a value T1 to the comparator 123.

Alternatively, the adder 121 adds filter tap coefficients excluding a predetermined filter tap coefficient Cₖ, among the filter tap coefficients received from the coefficient updating unit 111, to obtain a value T2. Next, the adder 121 receives a bottom threshold TH3 and a top threshold TH4 from the control unit 109, adds the value T2 to the bottom threshold TH3 to obtain a value T3, and adds the value T2 to the top threshold TH4 to obtain a value T4. Then, the adder 121 outputs the predetermined filter tap coefficient Cₖ and the values T3 and T4 to the comparator 123. For example, the predetermined filter tap coefficient Cₖ is the tap coefficient of a filter located at the center, among a plurality of filters included in the FIR filter unit 106.

In response to the value T1 from the adder 121 and a control signal from the control unit 109, the comparator 123 receives a bottom threshold TH1 and a top threshold TH2 from the control unit 109. If the value T1 is greater than TH2 and smaller than TH1, in response to a control signal from the control unit 109, the comparator 123 outputs a re-initialization signal for re-initializing the filter tap coefficients of the coefficient updating unit 111 to the coefficient updating unit 111.

Alternatively, in response to the predetermined filter tap coefficients Cₖ, T3, and T4 from the adder 121 and a control signal from the control unit 109, the comparator 123 receives a bottom threshold TH1 and a top threshold TH2 from the control unit 109. If the value T1 is greater than TH2 and smaller than TH1, in response to a control signal from the control unit 109, the comparator 123 outputs a re-initialization signal for re-initializing the filter tap coefficients of the coefficient updating unit 111 to the coefficient updating unit 111.

Figure 8 is a flowchart illustrating a filter tap coefficient updating method performed in the filter tap coefficient updating apparatus according to the second embodiment of the present invention. First of all, the re-initialization signal generation unit 120 receives a plurality of filter tap coefficients of an equalizer filter from the coefficient updating unit 111, in step 210.

The adder 121 of the re-initialization signal generation unit 120 obtains a reference value to determine whether filter tap coefficients are to be re-initialized, using the received filter tap coefficients, in step 220. Here, the reference value is either the value T1, which is the sum of all of the received filter tap coefficients, or the value T2, which is the sum of the received filter tap coefficients excluding the predetermined filter tap coefficient Cₖ.

The comparator 123 of the re-initialization signal generation unit 120 compares the reference value received from the adder 121 with a predetermined standard value and outputs a re-initialization signal to the coefficient updating unit 111 so that the coefficient updating unit 111 re-initializes the filter tap coefficients, in step 203. The predetermined standard value can be a top threshold or a bottom threshold.

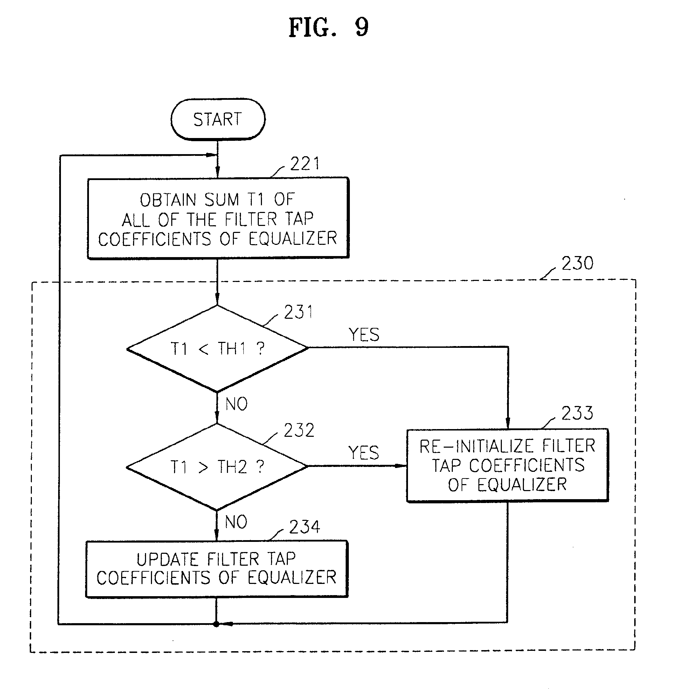

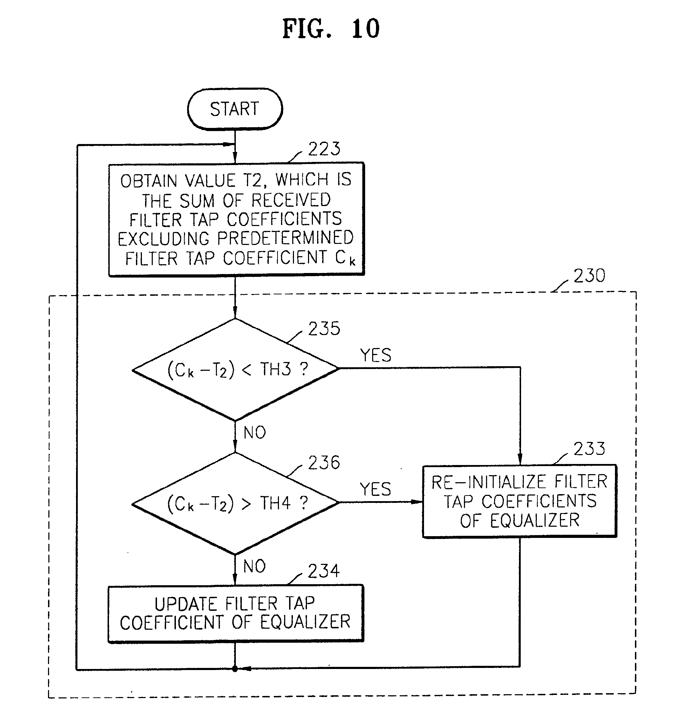

Figures 9 and 10 are flowcharts illustrating steps 220 and 230 of Figure 8 in greater detail. Referring to Figure 9, step 221 corresponds to a case when the value T1 is used as the reference value in step 220 of Figure 8. Step 230 of Figure 8 includes steps 231 through 234.

First of all, the adder 121 adds received filter tap coefficients to obtain the value T1 as a reference value, in step 221.

Next, the comparator 213 determines whether the reference value T1 received from the adder 121 is smaller than the bottom threshold TH1, in step 231.

If the reference value T1 is greater than or equal to the bottom threshold TH1, another determination is made as to whether the reference value T1 is greater than the top threshold TH2, in step 232.

As to the bottom threshold TH1 and the top threshold TH2, the tap coefficient sum T1 experimentally determines a minimum value and a maximum value when an equalizer is in a stable section, that is, operates normally, and the experimentally determined minimum and maximum values are determined as the bottom threshold TH1 and the top threshold TH2, respectively. In an embodiment of the present invention, TH1 is 0.25, and TH2 is 4.

After step 232, if the reference value T1 is smaller than or equal to the top threshold TH2, the coefficient updating unit 111 updates the filter tap coefficients of the equalizer, in step 234.

If it is determined in step 231 that the reference value T1 is less than the bottom threshold TH1, or if it is determined in step 232 that the reference value T1 is greater than the top threshold TH2, the re-initialization signal generation unit 120 outputs a re-initialization signal to the coefficient updating unit 111 so that the coefficient updating unit 111 re-initializes the filter tap coefficients of the equalizer, in step 233.

The initial filter tap coefficient values can be pre-stored filter tap coefficients of an equalizer that are in a stable state a predetermined period of time after the initial operation of the equalizer. The pre-stored filter tap coefficients can be used to re-initialize filter tap coefficients. Alternatively, initial filter tap coefficient values pre-set in the control unit 109 can be used to re-initialize the filter tap coefficients.

After each of steps 233 and 234, the method goes back to step 221.

Referring to Figure 10, step 223 corresponds to a case when the value T2 is used as the reference value in step 220 of Figure 8. The step 230 of Figure 8 includes steps 233 through 236.

First of all, in step 223, the adder 121 adds filter tap coefficients excluding the predetermined filter tap coefficient Cₖ, among the received filter tap coefficients, to obtain the value T2 as a reference value.

Next, the comparator 123 determines whether a value (Cₖ- T2) is less than the bottom threshold TH3, in step 235.

In step 236, if the value (Cₖ- T2) is greater than or equal to the bottom threshold TH3, another determination is made as to whether the value (Cₖ- T2) is greater than the top threshold TH4.

The bottom threshold TH3 and the top threshold TH4 can be experimentally determined in the same way as the bottom threshold TH1 and the top threshold TH2.

Then in step 234, if the value (Cₖ - T2) is less than or equal to the top threshold TH4, the coefficient updating unit 111 normally updates the filter tap coefficients of the equalizer.

If it is determined in step 235 that the value (Cₖ - T2) is less than the bottom threshold TH3, or if it is determined in step 236 that the value (Cₖ - T2) is greater than the top threshold TH4, the re-initialization signal generation unit 120 outputs a re-initialization signal to the coefficient updating unit 111 so that the coefficient updating unit 111 re-initializes the filter tap coefficients of the equalizer, in step 233.

The initial filter tap coefficient values can be pre-stored filter tap coefficients of an equalizer that are in a stable state a predetermined period of time after the initial operation of the equalizer. The pre-stored filter tap coefficients can be used to re-initialize the filter tap coefficients. Alternatively, initial filter tap coefficient values pre-set in the control unit 109 can be used to re-initialize filter tap coefficients.

After each of steps 233 and 234, the method goes back to step 223.

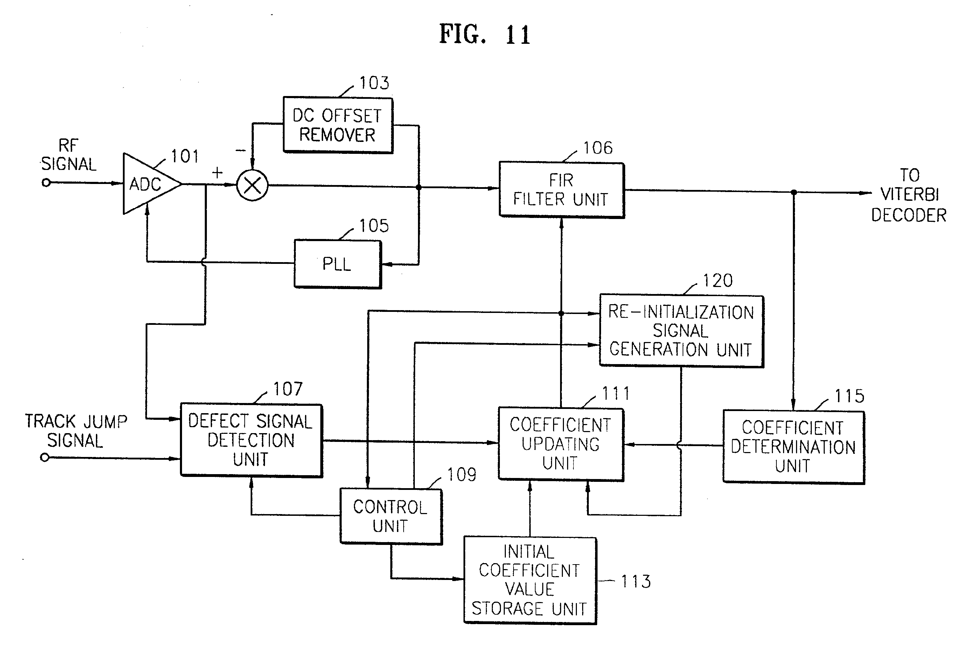

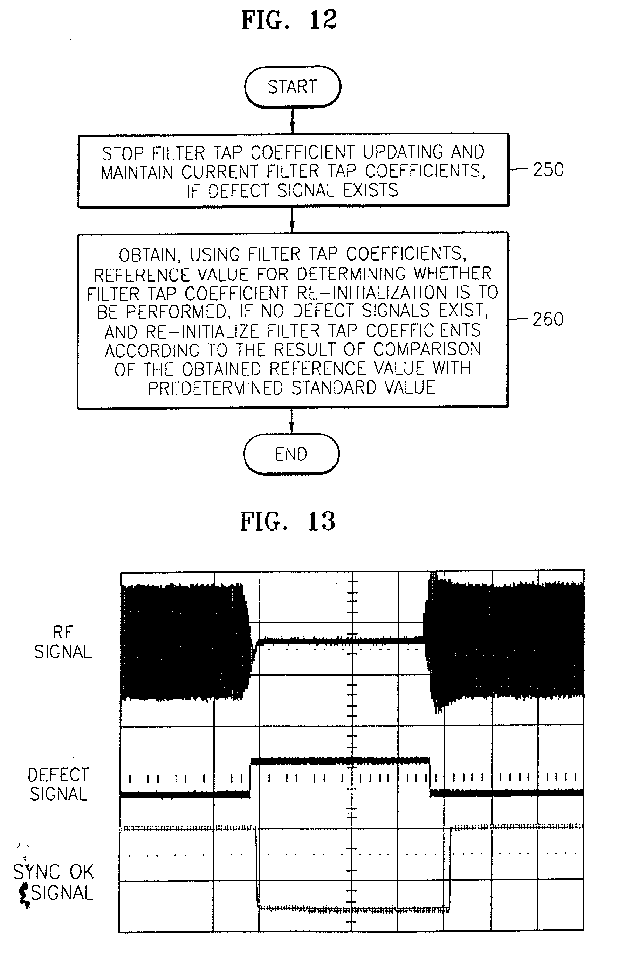

Hereinafter, a filter tap coefficient updating apparatus and method according to a third embodiment of the present invention will be described with reference to Figures 11 and 12.

An apparatus and method of updating the filter tap coefficients of an equalizer, according to the present invention, can be achieved by combining the first and second embodiments. That is, in the combined embodiment, a defect signal corresponding to defect generation or track jumping is detected to determine whether filter tap coefficient updating is to be stopped. If it is determined that filter tap coefficient updating is to be stopped, the filter tap coefficient updating is stopped. If it is determined that filter tap coefficient updating is not to be stopped, another determination is made as to whether filter tap coefficients are diffused into an unstable section, and the filter tap coefficients are re-initialized.

Figure 11 is a block diagram of an apparatus for updating the filter tap coefficients of an equalizer, according to a third embodiment of the present invention. Since the third embodiment is a combination of the filter tap coefficient updating apparatuses of Figures 1 and 6, only the elements that are different will be described, not the like elements.

When an RF signal and/or a track jumping signal are received by the defect signal detection unit 107, the filter tap coefficient updating apparatus according to the third embodiment first performs the operations of the method of Figure 2. That is, the defect signal detection unit 107 detects whether the RF signal is defective, and outputs an updating stop signal to the coefficient updating unit 111.

If the updating stop signal is 1, which represents that updating is to be stopped, the coefficient updating unit 111 stops updating the multiple filter tap coefficients of the FIR filter unit and outputs the current filter tap coefficients to the FIR filter unit 106, as described above.

On the other hand, if the updating stop signal is 0, which represents that updating is not to be stopped, the coefficient updating unit 111 updates the filter tap coefficients and outputs the results to the FIR filter unit 106. The coefficient updating unit 111 also outputs the updated filter tap coefficients to the re-initialization signal generation unit 120. The re-initialization signal generation unit 120 performs the steps of Figures 8 through 10 on the updated filter tap coefficients in order to determine whether or not the filter tap coefficients are diffused into an unstable section. If it is determined that the updated filter tap coefficients are diffused into an unstable section, the filter tap coefficients are re-initialized.

Figure 12 is a flowchart illustrating a filter tap coefficient updating method performed in the filter tap coefficient updating apparatus according to the third embodiment of the present invention. In step 250, if it is determined that an RF signal and/or a track jump signal is a defect signal, filter tap coefficient updating is stopped and the current filter tap coefficients are maintained. Step 250 corresponds to steps 201 through 207 of Figure 2.

After step 250, if a defect signal is detected, a reference value for determining whether filter tap coefficient re-initialization is to be performed is obtained from the filter tap coefficients, and the filter tap coefficients are re-initialized according to the result of a comparison of the reference value with a predetermined standard value, in step 260. Step 260 corresponds to steps 210 through 230 of Figure 8. Step 260 is also achieved by performing the steps shown in Figure 9 or 10. However, step 260 is achieved through steps 210 through 230 only if the update stop signal output from the defect signal detection unit 107 is "0", which represents that updating is to be continued.

Figure 13 illustrates waveforms representing the operation of the filter tap coefficient updating apparatus according to the first embodiment of the present invention shown in Figure 1. An RF signal represents a case in which a defect exists on an optical disc. The defect signal detection unit 107 detects a defect period and outputs a defect signal, that is, an update stop signal. According to the defect signal, which is the update stop signal, the coefficient updating unit 111 stops coefficient updating, maintains the current filter tap coefficients, and outputs the same to the FIR filter unit 106. Accordingly, a sync okay signal that represents whether a system is operating normally after the defect period remains at a high value, which shows that the system operates normally.

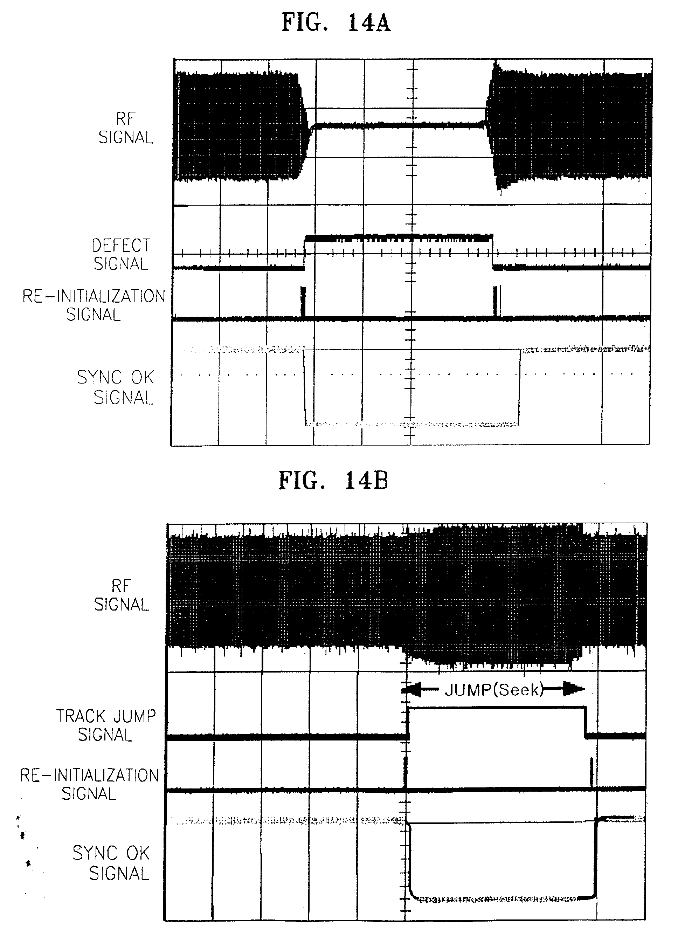

The operation of the filter tap coefficient updating apparatus according to the third embodiment of the present invention shown in Figure 11 is illustrated through the waveforms of Figures 14A and 14B. Figure 14A shows a waveform representing the operation of the filter tap coefficient updating apparatus of Figure 11 in the case of an RF signal. The defect signal detection unit 107 detects a defect period and outputs a defect signal, that is, an update stop signal. Immediately before a defect signal is generated and immediately after the defect signal ends, a re-initialization signal is produced by the re-initialization signal generation unit 120 in order to re-initialize the filter tap coefficients. The sync okay signal that represents whether a system is operating normally after the defect period remains at a high value, thus representing that the system is operating normally.

Figure 14B shows a waveform representing the operation of the filter tap coefficient updating apparatus of Figure 11 when a pickup means jumps a track. The defect signal detection unit 107 detects a track jump period based on a track jump signal received from a servo unit and outputs an update stop signal, which is the track jump signal. Immediately before the track jump signal is generated and immediately after the track jump signal is terminated, a re-initialization signal is produced by the re-initialization signal generation unit 120 in order to re-initialize filter tap coefficients. The sync okay signal that represents whether a system is operating normally after the defect period keeps a high value, thus representing that the system is operating normally.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and so on. Also, the computer readable codes can be transmitted via a carrier wave such as Internet. The computer readable recording medium can also be distributed over a network coupled computer system so that the computer readable code is stored and executed in a distributed fashion.

As described above, in an apparatus and method of updating the filter tap coefficients of an equalizer, according to the present invention, updating of the filter tap coefficients of the equalizer is stopped, or the filter tap coefficients are re-initialized. Accordingly, the filter tap coefficient updating is normally performed without errors even if a defect exists on an optical disc or track jumping occurs, so that freezing or breaking of an image screen is prevented.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for updating filter tap coefficients of an equalizer, the apparatus comprising:
a filter unit (106) filtering an error signal included in an input signal, which is a radio frequency (RF) signal reflected by an optical disc;
a defect signal detection unit (107) detecting whether the input signal is defective and outputting an update stop signal; and
a coefficient updating unit (111) stopping the updating of a plurality of filter tap coefficients of the filter unit (106) in response to the update stop signal and outputting the current filter tap coefficients to the filter unit (106).

2. The apparatus of claim 1, wherein the defect signal detection unit (107) further receives a track jump signal, detects whether the track jump signal is defective, and outputs the update stop signal.

3. The apparatus of claim 1 or 2, further comprising a control unit (109) outputting a predetermined reference voltage, which determines whether the input signal is defective, to the defect signal detection unit (107).

4. The apparatus of claim 3, further comprising an initial coefficient value storage unit (113) receiving predetermined initial filter tap coefficient values from the control unit (109), storing the received initial values, and outputting the initial values to the coefficient updating unit (111).

5. An apparatus for updating filter tap coefficients of an equalizer, the apparatus comprising:
a filter unit (106) filtering an error signal included in an input signal, which is an RF signal reflected by an optical disc;
a coefficient updating unit (111) updating a plurality of filter tap coefficients of the filter unit (106) and outputting the updated filter tap coefficients to the filter unit (106);
a control unit (109) outputting predetermined initial filter tap coefficient values;
an initial coefficient value storage unit (113) receiving the initial filter tap coefficient values from the control unit (109), storing the received initial values, and outputting the initial values to the coefficient updating unit (111); and
a re-initialization signal generation unit (120) receiving filter tap coefficients from the coefficient updating unit (111), detecting whether the filter tap coefficients are diffused, generating a filter tap coefficient re-initialization signal if the filter tap coefficients are diffused, and outputting the filter tap coefficient re-initialization signal to the coefficient updating unit (111);
wherein the coefficient updating unit (111) updates filter tap coefficients using the initial filter tap coefficient values received from the initial coefficient value storage unit (113), in response to the filter tap coefficient re-initialization signal.

6. The apparatus of claim 5, wherein the re-initialization signal generation unit (120) comprises:
an adder (121) receiving filter tap coefficients from the coefficient updating unit (111) and adding the received filter tap coefficients; and
a comparator (123) comparing the output value of the adder (121) with a predetermined reference value.

7. The apparatus of claim 6, wherein the adder (121) obtains a sum T1 of all of the filter tap coefficients received from the coefficient updating unit (111), and the comparator (123) receives a bottom threshold TH1 and a top threshold TH2 from the control unit (109) and outputs the re-initialization signal if the sum T1 is smaller than the bottom threshold TH1 or greater than the top threshold TH2.

8. The apparatus of claim 6 or 7, wherein the adder (121) obtains a sum T2 of all of the filter tap coefficients except a predetermined filter tap coefficient Cₖ among the filter tap coefficients received from the coefficient updating unit (111), receives a bottom threshold TH3 and a top threshold TH4 from the control unit (109), obtains a sum T3 of the sum T2 and the bottom threshold TH3, and obtains a sum T4 of the sum T2 and the top threshold TH4, and the comparator (123) outputs the re-initialization signal if the predetermined filter tap coefficient Cₖ is smaller than the bottom threshold TH3 or greater than the top threshold TH4.

9. The apparatus of claim 8, wherein the predetermined filter tap coefficient Cₖ is the filter tap coefficient of a filter located at the center of the filter unit (106) among the filter tap coefficients received from the coefficient updating unit (111).

10. The apparatus of any of claims 5 to 9, wherein the initial coefficient value storage unit (113) receives from the control unit (109) the filter tap coefficients of an equalizer that are in a stable state a predetermined period of time after the initial operation of the equalizer and stores the received filter tap coefficients.

11. The apparatus of any of claims 5 to 10, wherein the initial coefficient value storage unit (113) receives initial filter tap coefficient values pre-set in the control unit (109) from the control unit (109) and stores the received initial filter tap coefficient values.

12. An apparatus for updating the filter tap coefficients of an equalizer, the apparatus comprising:
a filter unit (106) filtering an error signal included in an input signal, which is an RF signal reflected by an optical disc;
a defect signal detection unit (107) detecting whether the input signal is defective and outputting an update stop signal;
a coefficient updating unit (111) stopping the updating of a plurality of filter tap coefficients of the filter unit (106) and outputting the current filter tap coefficients to the filter unit (106), if the update stop signal represents that updating is to be stopped, or updating the filter tap coefficients and outputting the updated filter tap coefficients to the filter unit (106) if the update stop signal does not represent that updating is to be stopped;
a control unit (109) outputting a predetermined reference voltage, which determines whether the input signal is defective, to the defect signal detection unit (107) and outputting predetermined initial filter tap coefficient values;
an initial coefficient value storage unit (113) receiving the initial filter tap coefficient values from the control unit (109), storing the received initial values, and outputting the initial values to the coefficient updating unit (111); and
a re-initialization signal generation unit (120) receiving filter tap coefficients from the coefficient updating unit (111), detecting whether the filter tap coefficients are diffused, generating a tap coefficient re-initialization signal if the filter tap coefficients are diffused, and outputting the tap coefficient re-initialization signal to the coefficient updating unit (111);
wherein the coefficient updating unit (111) updates filter tap coefficients using the initial filter tap coefficient values received from the initial coefficient value storage unit (113), in response to the tap coefficient re-initialization signal.

13. The apparatus of claim 12, wherein the defect signal detection unit (107) further receives a track jump signal, detects whether the track jump signal is defective, and outputs the update stop signal.

14. The apparatus of claim 12 or 13, wherein the re-initialization signal generation unit (120) comprises:
an adder (121) receiving filter tap coefficients from the coefficient updating unit (111) and adding the received filter tap coefficients; and
a comparator (123) comparing the output value of the adder (121) with the predetermined reference value received from the control unit (109).

15. The apparatus of claim 14, wherein the adder (121) obtains a sum T1 of all of the filter tap coefficients received from the coefficient updating unit (111), and the comparator (123) receives a bottom threshold TH1 and a top threshold TH2 from the control unit (109) and outputs the re-initialization signal if the sum T1 is smaller than the bottom threshold TH1 or greater than the top threshold TH2.

16. The apparatus of claim 14 or 15, wherein the adder (121) obtains a sum T2 of all of the filter tap coefficients except a predetermined filter tap coefficient Cₖ among the filter tap coefficients received from the coefficient updating unit (111), receives a bottom threshold TH3 and a top threshold TH4 from the control unit (109), obtains a sum T3 of the sum T2 and the bottom threshold TH3, and obtains a sum T4 of the sum T2 and the top threshold TH4, and the comparator (123) outputs the re-initialization signal if the predetermined filter tap coefficient Cₖ is smaller than the bottom threshold TH3 or greater than the top threshold TH4.

17. The apparatus of claim 16, wherein the predetermined filter tap coefficient Cₖ is the filter tap coefficient of a filter located at the center of the filter unit (106) among the filter tap coefficients received from the coefficient updating unit (111).

18. The apparatus of any of claims 12 to 17, wherein the initial coefficient value storage unit receives from the control unit (109) the filter tap coefficients of an equalizer that are stabilized a predetermined period of time after the initial operation of the equalizer and stores the received filter tap coefficients.

19. The apparatus of any of claims 12 to 18, wherein the initial coefficient value storage unit receives initial filter tap coefficient values pre-set in the control unit (109) from the control unit (109) and stores the received initial filter tap coefficient values.

20. A method of updating the filter tap coefficients of an equalizer, the method comprising:
(a) receiving an input signal, which is an RF signal reflected by an optical disc;
(b) detecting whether the input signal is defective; and
(c) stopping the updating of a plurality of filter tap coefficients of an equalizer filter unit (106) and outputting the current filter tap coefficients to the equalizer filter unit (106), if a defect is detected from the input signal.

21. The method of claim 20, wherein in step (a), a track jump signal is further received, and steps (b) and (c) are performed on the track jump signal.

22. The method of claim 20 or 21, wherein in step (b), a predetermined reference value is compared with the input signal.

23. A method of updating the filter tap coefficients of an equalizer, the method comprising:
(a) receiving a plurality of filter tap coefficients of an equalizer filter unit (106);
(b) obtaining a reference value for determining whether filter tap coefficient re-initialization is to be performed, from the filter tap coefficients; and
(c) comparing the reference value with a predetermined standard value and re-initializing the filter tap coefficients.

24. The method of claim 23, wherein in step (b), a sum T1 of all of the filter tap coefficients is determined as the reference value.

25. The method of claim 23 or 24, wherein in step (b), a sum T2 of the filter tap coefficients except a predetermined filter tap coefficient Ck among the filter tap coefficients of the equalizer filter unit (106) is determined as the reference value.

26. The method of claim 24 or 25, wherein in step (c), the filter tap coefficients are re-initialized if the sum T1 is smaller than a bottom threshold TH1 or greater than a top threshold TH2.

27. The method of claim 25 or 26, wherein in step (c), the filter tap coefficients are re-initialized if a value after the sum T2 is subtracted from the predetermined tap coefficient Cₖ is smaller than a bottom threshold TH3 or greater than a top threshold TH4.

28. The method of any of claims 25 to 27, wherein the predetermined filter tap coefficient Cₖ is the filter tap coefficient of a filter located at the center of the filter unit (106) among the filter tap coefficients.

29. The method of any of claims 23 to 28, wherein in step (c), the filter tap coefficients of the equalizer filter unit (106) are re-initialized using filter tap coefficients pre-stored in an equalizer stabilized a predetermined period of time after the initial operation of the equalizer.

30. The method of any of claims 23 to 29, wherein in step (c), the filter tap coefficients of the equalizer filter unit (106) are re-initialized using initial filter tap coefficient values pre-set in a control unit (109) of the equalizer.

31. A method of updating the filter tap coefficients of an equalizer, the method comprising:
(a) receiving an input signal, which is an RF signal reflected by an optical disc;
(b) detecting whether the input signal is defective;
(c) stopping the updating of a plurality of filter tap coefficients of an equalizer filter unit (106) and outputting the current filter tap coefficients to the equalizer filter unit (106), if a defect is detected from the input signal;
(d) obtaining a reference value for determining whether filter tap coefficient re-initialization is to be performed, from the filter tap coefficients, if no defects are detected from the input signal; and
(e) comparing the reference value with a predetermined standard value and re-initializing the filter tap coefficients.

32. The method of claim 31, wherein in step (a), a track jump signal is further received, and steps (b) through (e) are performed on the track jump signal.

33. The method of claim 31 or 32, wherein in step (b), a predetermined reference value is compared with the input signal.

34. The method of claim 31, 32 or 33, wherein in step (d), a sum T1 of all of the filter tap coefficients is determined as the reference value.

35. The method of claim 31, 32, 33 or 34, wherein in step (d) , a sum T2 of all of the filter tap coefficients except a predetermined filter tap coefficient Cₖ among the filter tap coefficients of the equalizer filter unit (106) is determined as the reference value.

36. The method of claim 34, wherein in step (e), the filter tap coefficients are re-initialized if the sum T1 is smaller than a bottom threshold TH1 or greater than a top threshold TH2.

37. The method of claim 35, wherein in step (e), the filter tap coefficients are re-initialized if a value after the sum T2 is subtracted from the predetermined tap coefficient Cₖ is smaller than a bottom threshold TH3 or greater than a top threshold TH4.

38. The method of any of claims 35 to 37, wherein the predetermined filter tap coefficient Cₖ is the filter tap coefficient of a filter located at the center of the filter unit (106) among the filter tap coefficients.

39. The method of any of claims 34 to 38, wherein in step (e), the filter tap coefficients of the equalizer filter unit (106) are re-initialized using filter tap coefficients pre-stored in an equalizer stabilized a predetermined period of time after the initial operation of the equalizer.

40. The method of any of claims 34 to 37, wherein in step (e), the filter tap coefficients of the equalizer filter unit (106) are re-initialized using initial filter tap coefficient values pre-set in a control unit (109) of the equalizer.

41. A computer readable recording medium that stores a program for implementing a method of updating the filter tap coefficients of an equalizer, the method comprising:
(a) receiving an input signal, which is an RF signal reflected by an optical disc;
(b) detecting whether the input signal is defective; and
(c) stopping the updating of a plurality of filter tap coefficients of an equalizer filter unit (106) and outputting the current filter tap coefficients to the equalizer filter unit (106), if a defect is detected from the input signal.

42. A computer readable recording medium that stores a program for implementing a method of updating the filter tap coefficients of an equalizer, the method comprising:
(a) receiving a plurality of filter tap coefficients of an equalizer filter unit (106);
(b) obtaining a reference value for determining whether filter tap coefficient re-initialization is to be performed, from the filter tap coefficients; and
(c) comparing the reference value with a predetermined standard value and re-initializing the filter tap coefficients.

43. A computer readable recording medium that stores a program for implementing a method of updating the filter tap coefficients of an equalizer, the method comprising:
(a) receiving an input signal, which is an RF signal reflected by an optical disc;
(b) detecting whether the input signal is defective;
(c) stopping the updating of a plurality of filter tap coefficients of an equalizer filter unit (106) and outputting the current filter tap coefficients to the equalizer filter unit (106), if a defect is detected from the input signal;
(d) obtaining a reference value for determining whether filter tap coefficient re-initialization is to be performed, from the filter tap coefficients, if no defects are not detected from the input signal; and
(e) comparing the reference value with a predetermined standard value and re-initializing the filter tap coefficients.
